# EUROPEAN PATENT APPLICATION

(11) **EP 2 268 093 A1**
(43) Date of publication of application: **29.12.2010**
(21) Application number: 09290487.9
(22) Date of filing: 25.06.2009
(51) Int. Cl.: H04W 76/02

(54) **Two stage dialing method and communication device**

(71) Applicant: Paloma Networks, 75015 Paris (FR)
(72) Inventor: Murzeau, Bastien, 92340 Bourg-la-Reine (FR)

(57) **Abstract**

The invention relates to a wireless communication device for use in a wireless communication network, said wireless communication device comprising selecting means for allowing a user of the wireless communication device to select a first number, a processor arranged to set up communications with the cellular communication network and to receive the selected first number from the selected means, an identification module arranged to receive the selected first number from the processor, store the selected first number in a memory, provide to the processor an access number to a media gateway so that said processor can set up a communication with said media gateway, upon receiving a confirmation message that the communication with the media gateway has been established, provide the selected first number to the processor for transmission of said selected first number to said media gateway.

## Description

### FIELD OF THE PRESENT SYSTEM:

The present invention generally relates to wireless communications, and more specifically to multistage dialing communications.

### BACKGROUND OF THE PRESENT SYSTEM:

In a communications system or network, communication services are generally available over a large area formed by the reunion of a number of smaller areas called cells. Typically each cell deploys the communication services through a base transceiver station (BTS), or base station in short, using one or more antennas for transmission to and reception from a user device, such as for instance a mobile device. Existing radio communication standard are for instance GSM (Global System for Mobile Communications) and the Universal Mobile Telecommunications system (UMTS), both generally referred to as cellular networks. Other radio communication networks are for instance WiFi or WiMax networks.

A user of a mobile device can select a phone or device number identifying a called party (or callee) to reach by selecting a number of inputs on input means such as a keypad, voice activation or a touch screen. The phone number can either be dialed-in or keyed-in digit-by-digit. Alternatively, a previously dialed number or a stored number from the mobile device phonebook (or contact list) can be used again.

A mobile phone or device is generally a subscriber to a communication network, for instance a cellular network, in order to enjoy communication services, such as voice, data, ... A mobile user is generally identified using an International Mobile Subscriber Identity, or IMSI. The mobile IMSI is a unique number associated with all GSM and Universal Mobile Telecommunications System (UMTS) network mobile phone users. It is stored in an identification module stored inside the phone, generally called the Subscriber Identity Module (SIM) in cellular communication networks. The SIM, which generally comprises memories and a processing unit, is actually unique to one subscriber and carries the IMSI and further identification data to identify that subscriber in his home network, i.e. the network he is a subscriber of. The SIM may also store other data such as programming instructions executable on the SIM processor. The SIM is generally provided initially by the network operator when a user gets his subscription, and can be updated either through the network (SMS updates) or subscriber inputs when storing the phone numbers of the subscriber's contacts.

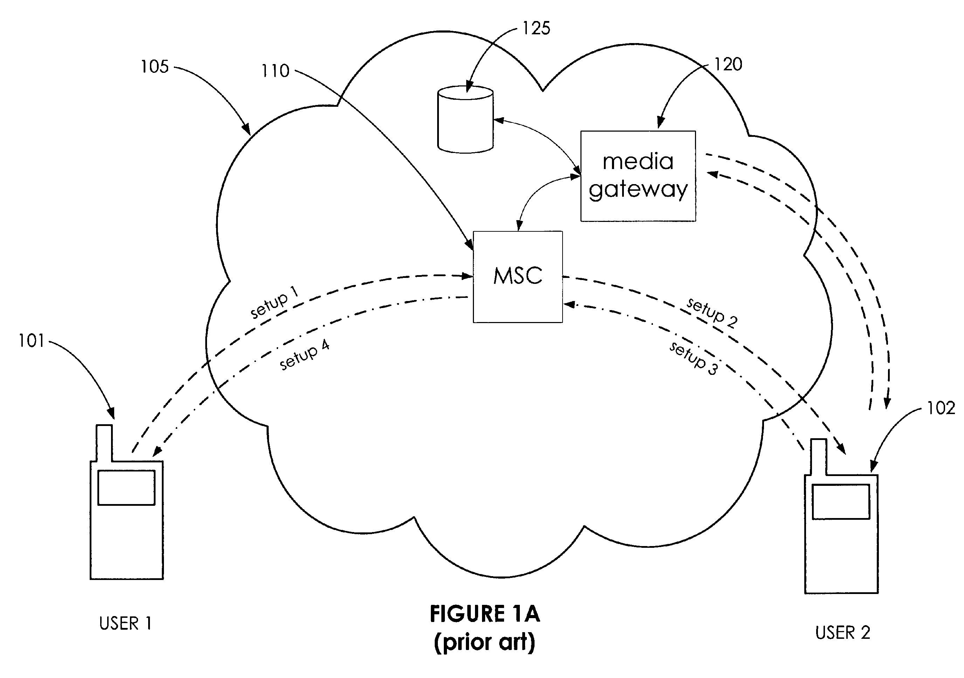

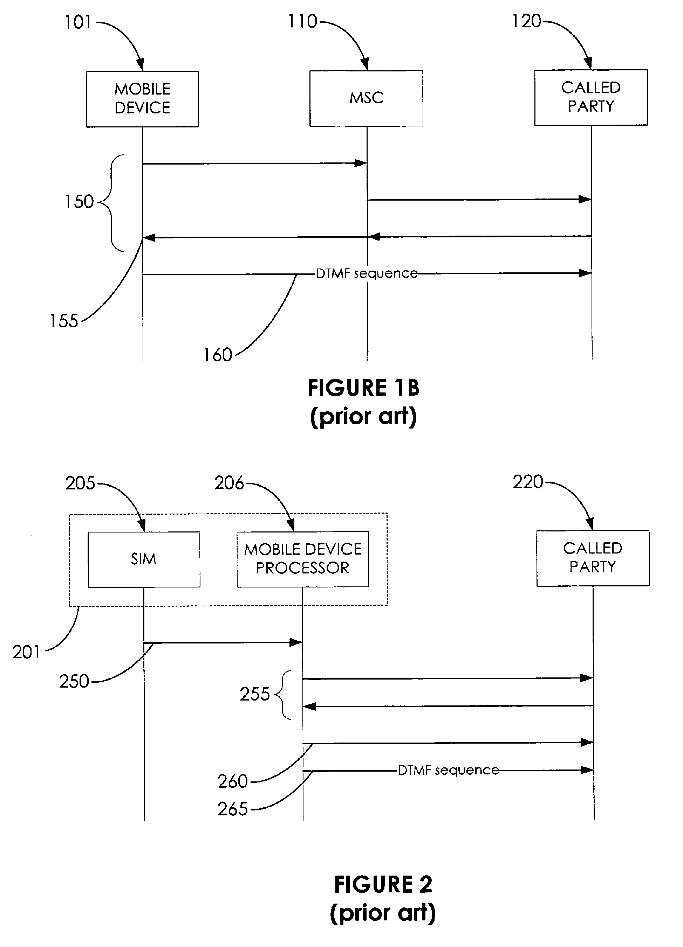

In existing exemplary cellular communication networks, as illustrated in FIG. 1A, a first user, or calling party (user 1) may select a phone number on his mobile phone 101, for calling a second party or called party, and identified by the selected phone number. The second user (illustrated as a communication device 102 of a second user in FIG. 1 A) may be a landline or mobile user, or even a communication server offering a communication service the calling party is interested in. To establish the call, the mobile phone 101 will call that phone number by transmitting a call request, or call setup message setup 1, for that phone number to a switching component 110 through the base station (not shown in FIG.1) mobile phone 101 is currently attached to. In the present illustration of a GSM network 105, switching component 110 may be typically a Mobile Services Switching Centre (MSC) 110 of the cellular network 105. The switching component may connect the call to the Public Switched Telephone Network (PSTN, not shown in FIG. 1 A) which itself further connects the call to the second user, either a subscriber of the PSTN itself (i.e. a PSTN receiver) or on to another communication network as needed in order to reach the communication device 102. The connection with the second communication device 102 is illustrated in FIG. 1A through a second setup message setup 2. A confirmation message, setup 3, may be sent back to the MSC 110, which itself will forward a confirmation message, setup 4, back to the mobile device 101 to confirm to the mobile device 101 that the call is established.

Subscribers or users to communication networks are nowadays offered an ever increasing number of enhanced communication features or services. Among known services, one can find voice mail, call forwarding, call waiting, Caller ID presentation and multistage dialing.

Different features under the appellation of "Multi-stage dialing", "Dual Tone Multiple Frequency (DTMF)" or "Two-stage dialing" are offered in existing cellular communication networks. This kind of feature, illustrated in FIG. 1B, can be described as a communication service wherein the calling party 101, firstly, setup a call to a called party or callee 120 (i.e. first dialing stage 150 in FIG. 1 B). The call as described here before is established through MSC 110. When the calling party 101 gets confirmation that the call is established in 155, it will then send a DTMF tone sequence to the callee (i.e. second dialing stage 160) over the established call. In this context, the called party receives this sequence and processes it. In the following the reference to a "two-stage dialing" will be understood as encompassing the different appellations listed here before.

In the illustration of FIG. 1B, the calling party may be a mobile device as illustrated in FIG. 1A. The second party, operable to handle DTMF tones sent over a communication established with the mobile device, is generally called media or service gateway, or network termination equipment 120. In the illustration of FIG. 1A, the media gateway is operatively coupled to MSC 110 and hosted by the cellular communication network 105. This is merely for illustration purposes as the media gateway 120 may be hosted in the PSTN or by another communication network.

In general, the media gateway 120 is a service center or equipment operable to interpret the DTMF sequence tones sent by the calling party's mobile device 101 through the mobile and fixed telecommunication networks. Nowadays, a majority of mobile devices are arranged to send DTMF tones by pressing buttons from their keypad or using pre-recorded phone numbers. The two stage dialing feature is particularly useful for communication services such as international telephony services. Indeed, it allows allow users to call international numbers with cheaper fares by e.g. calling a local media or telecom gateway which is responsible to transport the call through a cheaper bearer (e.g. Voice Over Internet Protocol). In international telephony services as well as similar communication services, the caller first dials an access number for a media gateway, gateway often located "locally" in calling party's country. In a second stage once the call is established with the media gateway, the caller dials a second number, for instance the international phone number to reach, using DTMF tones. The mobile device will translates each pressed (or pre-recorded) digit key into DTMF tones and send these tones over the established call. The mobile device will then wait for the local media gateway to process the sent DTMF tones so that the call to the international number can be established.

However, dialing the service gateway number and DTMF tones consecutively can be somehow a burden to users. A number of existing solutions are available today to automate this operation. Three existing solutions will be presented hereafter.

### 3GPP address book logic (DTMF digits)

Third Generation Partnership Project (3GPP) standards defined a "two-stage dialing" method which is described in 3GPP TS 11.11 V8.14.0 (2007-06) - 3rd Generation Partnership Project: Technical Specification Group Terminals: "Specification of the Subscriber Identity Module - Mobile Equipment (SIM - ME) interface" (Release 1999), section 10.5.1 called "Elementary File ADN".

By definition, ADN stands for Abbreviated Dialing Number and can be seen as a mini-phone book - or directory - stored inside the SIM, wherein the network operator providing the SIM can record short numbers like service numbers to reach e.g. the operator customer services. Each ADN entry corresponding to a short number can be associated to digits which will be sent by DTMF. A typical ADN entry is provided in Table 1:

**Table 1: typical ADN entry as defined by section 10.5.1 of 3GPP TS 11.11 V8.14.0**

| **Alpha identifier** | **No** |
|---|---|
| Operator Customer Care | 0044208444800**P*1234#** |

As seen in Table 1, each entry comprises in a first field an alpha identifier corresponding for instance to the service accessible through the ADN number. A second field will comprise:
- a first number which is a usual PSTN number to reach the service provided by a service gateway,
- a separator "P" is a DTMF control digit separator as defined in 3GPP TS 02.07,
- the last digits "***1234#**" are the digits which have to be sent by DTMF to the service gateway.

FIG. 2 shows an illustration of a known two stage dialing using an ADN. For simplification purposes, the MSC is not represented even though it is involved in the call setup. In the ADN solution, the mobile device, more precisely its mobile device processor 206, will control and process the two-stage dialing operations. As the user powers up his mobile device 201 after inserting the SIM 205, ADN numbers will be loaded from the SIM to the user contact list stored in the mobile device phonebook (act 250 in FIG. 2). When selecting such an ADN number from his contact list, the mobile device processor 206 will directly call the service gateway, i.e. the called party 220, corresponding to the PSTN number of the second ADN field (acts 255 of FIG. 2). Once the call is connected (act 260), the mobile device sends the last digits of the second field (separated by the DTMF control digit separator from the PSTN number) by DTMF to the called party 220 (act 265 of FIG. 2).

The ADN entries are static entries, limited in number. Even if a dynamic update of the ADN directory was available over SMS updates for instance, a synchronization problem could arise between the mobile device phonebook and the ADN directory. As the ADN directory is loaded inside the mobile device phonebook, synchronization issues can happen as some mobile devices do not check regularly ADN modifications. Furthermore, an ADN entry has a limited number of digits, as defined in 3GPP TS 11.11 V8.14.0, which can be sent by DMTF.

When building a new mobile device (or handset) interacting with a SIM card, the mobile manufacturer has normally to comply with 3GPP TS 11.11 V8.14.0 specifications so that the new mobile device can accurately interpret the ADN fields given by the SIM card. The SIM being a removable component, this one could be used in different mobile devices complying with SIM 3GPP standards. Unfortunately, manufacturers mentioning that their devices are 3GPP SIM compliant do not guarantee the ADN functionality.

### Handset side logic (proprietary software based solution)

As mentioned earlier, the ADN two-stage dialing functionality presents drawbacks. Alternatively, this two-stage functionality may be directly developed into the mobile device. This may be achieved for instance by installing in the mobile device a software module operable to interact with the proprietary mobile phone OS (operating system). Such piece of software are generally developed by specialized companies bearing in mind the mobile handset proprietary operating system. In addition, such a piece of software will have to comply with the capabilities of the mobile device propriety APIs (Application Programming Interface) for handling DTMF tones for instance.

However, such a solution is not suitable, as handset market offers a large selection of mobile devices from diverse manufacturers, making the development process largely different from one handset to the other, lacking any standardized approach. In addition, software companies which are willing to cover a large set of handset, have to develop and maintain a different software development for each different type of mobile device making the task almost impossible.

### J2ME: Soft java JSR (software based solution)

To avoid this interoperability issue from the proprietary software based solution here before, mobile constructors came with another idea which is to use and implement an interoperable platform above the handset OS. This platform is called Java 2 Platform, Micro Edition (J2ME) and is used to develop and push new JAVA services on the mobile handset.

One of these services could be the two-stage dialing functionality. Thanks to the common J2ME platform among mobile devices, only one software development would be necessary, and this one could be spread all over J2ME compliant handset.

If this solution would allow to develop and maintain a common approach to the two-stage dialing for different mobile devices, one major issue remains as some mobile constructors do not implement the J2ME specification entirely. In fact, some developments require dependency packages called Java Specification Request (JSR) and when a constructor releases a new mobile phone the list of supported JSR are provided. Some of them are mandatory to run JAVA applications.

Another issue is about security when any application running on a mobile device has to be approved and signed by the mobile device manufacturer. This signature is a certificate which allows the application to perform security features such as changing the number to call on the fly. This kind of operation requires high level security certificate. An application implementing the two-stage dialing feature would therefore require to be approved by all mobile device manufacturers to allow interoperability.

Today none of the existing two-stage dialing techniques could be directly and easily implemented on any type of phones. Therefore, there is still a need for a two-stage dialing solution that can be implemented by any network operator on any wireless communication device. There is a further need for a solution that is not proprietary and can rely upon existing cellular communication device functionalities.

### SUMMARY OF THE PRESENT SYSTEM AND METHOD:

It is an object of the present system, processor and method to overcome disadvantages and/or make improvements in the prior art.

To that extent, the present method proposes a wireless communication device according to claim 1.

Thanks to the present communication device, a solution is provided to easily implement a two stage dialing feature that can be used by any existing communication devices. For cellular devices, the proposed solution relies upon the existing SIM toolkit and implemented through a software program executed by the SIM. Such a software program may be uploaded by the SIM card through an simple SMS (short message service) update. No modification of the existing SIM/mobile device interaction is needed. The present teachings may be extended to any wireless communication network hosting mobile devices equipped with an identification module.

An identification module according to claim 4, a method for operating a wireless communication device according to claim 6 as well as a computer program according to claim 8, will be also described here after.

### BRIEF DESCRIPTION OF THE DRAWINGS:

The present telecommunication system, telecommunication device and method are explained in further detail, and by way of example, with reference to the accompanying drawings wherein:
   FIG. 1A shows an illustration of a known telecommunication system,
   FIG. 1B shows an exemplary flowchart of a known two stage dialing feature,
   FIG. 2 shows another exemplary flowchart of a known two stage dialing feature,
   FIG. 3A show an exemplary embodiment of a mobile device according to an embodiment of the present system,
   FIG. 3B show an exemplary embodiment of a communication system according to an embodiment of the present system,
   FIG. 4A shows an exemplary diagram according to an exemplary embodiment of the present method, and;
   FIG. 4B shows an exemplary flowchart of a two stage dialing feature according to another embodiment of the present method.

### DETAILED DESCRIPTION OF THE PRESENT SYSTEM AND METHOD:

The following are descriptions of exemplary embodiments that when taken in conjunction with the drawings will demonstrate the above noted features and advantages, and introduce further ones.

In the following description, for purposes of explanation rather than limitation, specific details are set forth such as architecture, interfaces, techniques, etc., for illustration. However, it will be apparent to those of ordinary skill in the art that other embodiments that depart from these details would still be understood to be within the scope of the appended claims.

For purposes of simplifying a description of the present system, the terms "operatively coupled", or "coupled" will refer to a connection between devices and/or portions thereof that enables operation in accordance with the present system. For example, an operative coupling may include one or more of a wired connection and/or a wireless connection between two or more devices that enables a one and/or two-way communication path between the devices and/or portions thereof. For example, an operative coupling may include a wired and/or wireless coupling to enable communication between a mobile device and a media gateway. An operative coupling may also relate to an interaction between a SIM card and the mobile device hosting it.

Furthermore, what will be referred to as a "call" or a "communication" in this description may be a standard voice call or any other session established between a first party referred to calling party or caller, and another (second) party referred to as the called party. One may understand of course that the call is placed more precisely between the users' telecommunication devices, i.e. the calling device and the called device. The called device may be a mobile device, a landline device or a gateway as illustrated hereafter. More generally, the called device may be any device capable of receiving PSTN calls.

In the illustrations here after, unless mentioned otherwise, reference will be made to a cellular communication network, comprising one or more mobile devices hosting a SIM card. This is in no way a limitation of the present invention as the present teachings can be implemented in other wireless communication networks comprising mobile devices hosting an identification module.

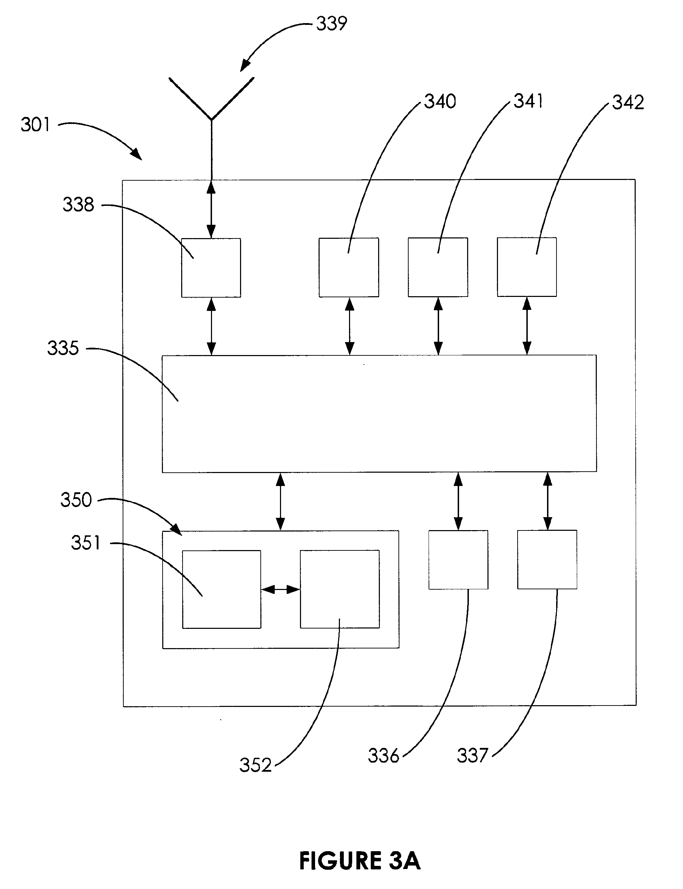

FIG. 3A illustrates an exemplary embodiment of a mobile device according to the present system. As shown, the mobile device 301 comprises a main processor 335 which is operatively coupled to:
- a subscriber identification module (SIM) 350, comprising a SIM processor 351 and a SIM memory 352. SIM 350, also referred to as U (Universal) SIM, comprises identification data to identify the user of the mobile device 301 as a subscriber to his home wireless communication network. SIM memory 352 may further comprise computer program instructions that cause the SIM processor 351 to implement an embodiment of the present method,
- a mobile device memory 342 for storing for instance the user phone book, the mobile device operating system (OS), as well as computer program instructions that cause the main processor 335 to implement another embodiment of the present method,
- a microphone 336 and a loudspeaker 337 enabling the user to input voice and hear audio output from the mobile device 301,
- selecting means, i.e. a user input interface such as a keyboard or a touch screen 340, by which the user can input and/or select numbers to be called and other information and also can access and control various features of the mobile telephone 301;
- a display 341 on which the number to be called and other information can be displayed; and
- a radio transmitter and receiver 338, coupled to an antenna 339, for transmitting and receiving communications to and from the cellular communication network.

Mobile devices such as the mobile device 301 of FIG. 3A are generally compliant with the GSM standard. In the present method, the new mechanism to build the two-stage dialing feature benefits from the medium's characteristics on which it runs, namely the USIM, generally also referred to as smart card. Indeed, the two stage dialing logic is integrated into the Universal Subscriber Identity Module (USIM) using an existing framework called SIM Toolkit previously defined by 3GPP TS 31.111 V3.14.0 (2007-06) - Third Generation Partnership Project; Technical Specification Group Terminals; "USIM Application Toolkit (USAT)" (Release 1999). The SIM toolkit defines interactions between a GSM compliant mobile phone and the USIM.

In the illustration of FIG. 3A, the smart card 350 (i.e. USIM application) is shown as part of the mobile device 301. Strictly speaking, they are separated entities that interact together in digital cellular telecommunication system technology. By definition:
- the smart card (i.e. USIM application) is a secure component embedding sensitive information, such as the identification data mentioned before, and,
- the mobile device 301, more precisely its main processor 335, manages the voice and data communication with a cellular communication network. In other words, the mobile device is arranged to set up communications with the cellular communication network.

In the hereafter description, mobile equipment will refer to the association of the mobile device 301 and the USIM 350.

All GSM mobile devices complying with the TS 31.111 specification can receive and interpret specific remote commands called proactive commands from the SIM application toolkit. For instance, such commands may allow performing remote control operations on the mobile device, such as:
- setting up a new call,
- opening a General Packet Radio Service (GPRS) connection, or data connection,
- sending DTMF tones over an established new call,
- receiving user input...

The entire list of proactive commands is available from the section 6 of TS 31.111, and entitled "proactive UICC (USIM Integrated Circuit Card)".

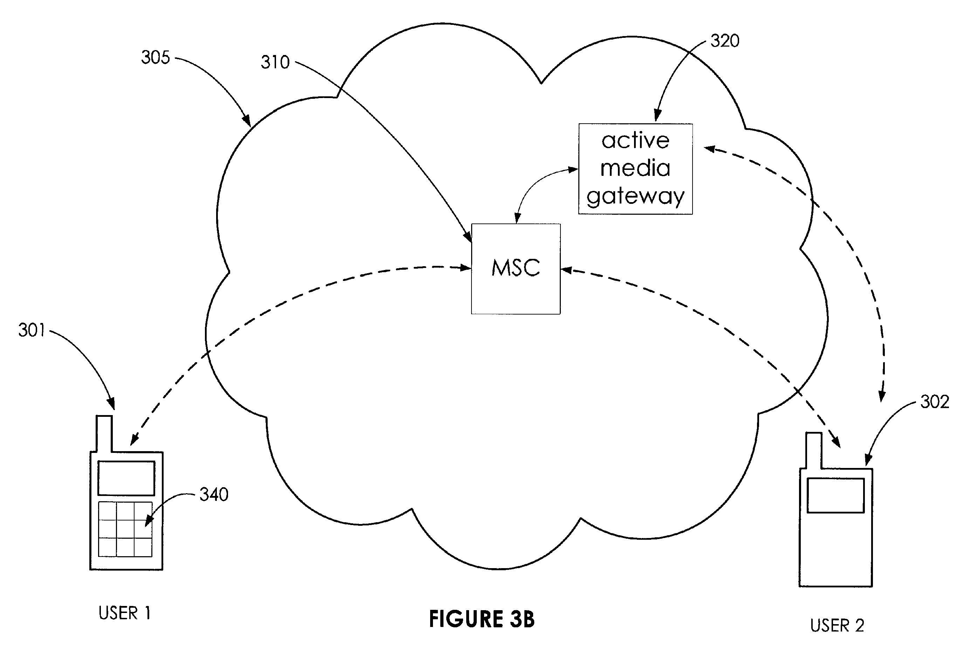

In the present system, mobile device 301 and USIM 350 are operable, using the existing SIM toolkit framework of TS 31.111 to interact with a media gateway to implement the two stage dialing functionality of the present invention. FIG. 3B is an illustration of an exemplary embodiment of a cellular communication network 305 according to the present system and comprising this media gateway.

A first user, or calling party (user 1) may select a first number on his mobile phone 301 (similar to mobile device of FIG. 3A), for calling a second party or called party 302, and identified by the selected first number. The first number may be for instance the called party phone number (either selected from the mobile phone 301 phonebook or dialed directly) using selecting means 340. The second user (illustrated as a communication device 302 of a second user in FIG. 3B may be a landline or mobile user, or even a communication server offering a communication service the calling party is interested in.

As in the known cellular communication network of FIG. 1A (comprising MSC 110), a MSC 310 is provided to connect any call or communication originating from the calling party 301. A media gateway 320 is also provided in the present system to cooperate with the mobile device 301 to implement the two stage dialing feature of the present system. As such, media gateway 320 is:
- characterized by an access phone number, access number in short, that the mobile device 301 may call to reach said media gateway,
- operable to identify a DTMF tone sequence corresponding to a phone number and process a call to this phone number. Media gateway 320 corresponds to known media gateway described here before in conjunction with known two stage dialing features.

For simplification purposes, media gateway 320 is shown as being located within cellular communication network 305. As MSC 310 is operable to connect any calls originating from the calling party 301, media gateway 320 may be located in a different communication network, cellular or not. Furthermore, in the present illustration, cellular communication network 305 is the home network of the mobile device 301. The person skilled in the art will apply the present teachings to any other cellular communication network that the mobile device may be visiting, situation which is often referred to as roaming in a visited network. As mentioned before, the person skilled in the art may easily transpose the present teachings to any wireless communication network, home or visited, hosting mobile devices comprising an identification module.

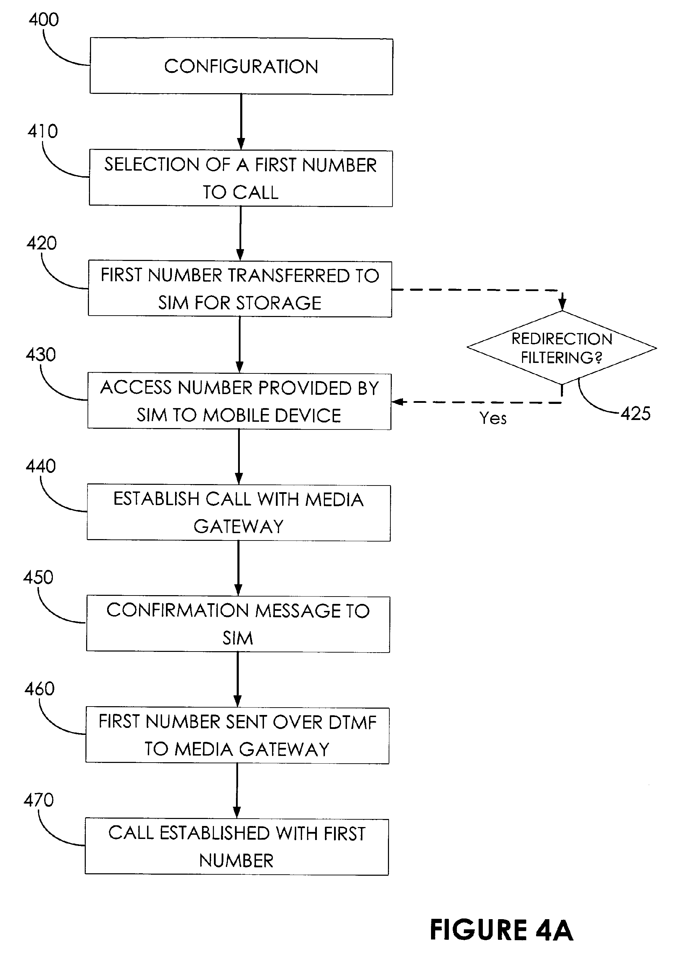

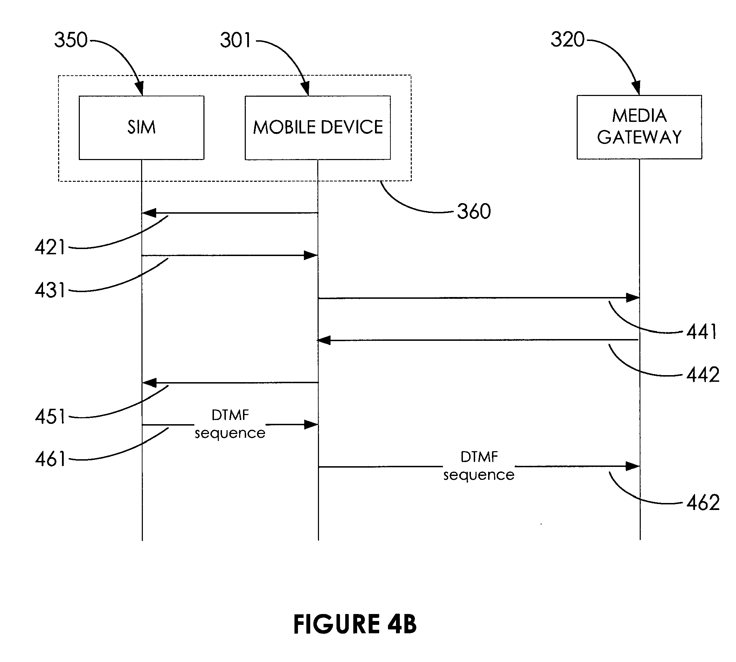

FIG. 4A is an illustrative process flow diagram of an embodiment of the present method. FIG. 4A will be described here after in conjunction with FIG. 4B showing a message flow chart between the different entities or components of the present system, namely the mobile device 301 (more precisely its main processor 335), the USIM 350 and the media gateway 320. For simplification purposes, MSC 310 is not shown in FIG. 4B so as to not obscure the description of the present system. Mobile device 301 and USIM 350 form together the mobile equipment 360 in FIG. 4B.

In the two stage dialing feature according to the present system, the USIM component will control and process the two-stage dialing operations. As the USIM comprises its own SIM processor 351, the present method may be implemented through a software or computer program running on the SIM processor 351. In a preliminary act 400 of the present method, a computer program may be uploaded in the SIM memory 352, program comprising instructions to implement the present method when running on the SIM processor 351. These instructions may be provided by the network operator along with the SIM card of the first user when becoming a subscriber to the cellular communication network 305. Alternatively, the computer program may be provided through a data download by SMS (Short Message Service) update sent to the mobile equipment 360, as defined in 3GPP Digital cellular telecommunications system (Phase 2+); Specification of the SIM Application Toolkit (SAT) for the Subscriber Identity Module - Mobile Equipment (SIM-ME) interface (3GPP TS 11.14 version 8.17.0 Release 1999), section 7, or subsequent version (for instance 3GPP TS 31.111 version 8.3.0 Release 8, section 7.1.

In the present method, the SIM will rely upon an access number for the media gateway 320. This access number has sometimes to be reviewed and changed. In the present solution relies upon for USIM toolkit; the update of the access number, also referred to here after as the first stage dialing number, may also be done over the air via an SMS update, as mentioned here before. The SMS update may be triggered for instance through a request made to a platform accessible over the internet, this platform allowing the selection of different media gateways. A client application may also be available on the mobile device 301 for selecting the appropriate media gateway. When a media gateway is selected by the first user, a request will be sent to his home cellular communication network so that an SMS update is sent back to the mobile device for updating the media gateway to the selected one.

This update may be of particular interest when the cellular communication network is a Private Branch exchange. A Private Branch exchange (PBX) is a private telephone network that serves a particular business or office, as opposed to one that a common carrier or telephone company operates for many businesses or for the general public. A PBX is generally enabled through a PBX server and includes an access to a public switched telephone network (PSTN) for accessing outside the private telephone network. When the PBX comprises multiple sites, it may be of interest to change the media gateway if more than one media gateway is available, and consequently the access number when a user visits more than one site.

In a further exemplary embodiment of the present method, the SIM card or the mobile device may be configured to request an update of the access number when identifying that the mobile device has registered with a different cellular communication network. For instance, the media gateway may be a first media gateway available to users in their home network. When one user roams in a visited network his home network operator has agreement with, it may be interesting to use a local media gateway for the two stage dialing feature. Upon identification of a registration with this visited network, either the USIM or the mobile device will request an update of the access number. Alternatively, the update may be automatically triggered by the home network, for instance by the HLR (Home Location Register) upon identifying a new location for the first user.

In the description hereafter, the access number relied upon by the SIM corresponds to a media gateway that will be referred to as the active media gateway.

In a further act 410, the user will select a first number to call using the selecting means 340. The first number may be a number from his phonebook, a previously dialed number, or a new number that he dials directly using for instance the keyboard or a touch sensitive screen. The selected first number is received by the main processor 335 of the mobile device 301, which further notifies the USIM in a further act 420. The mobile device 301 may notify the USIM of the selected first number using a "call control" envelope as defined in section 7.3 of 3GPP TS 31.111. This corresponds in FIG. 4B to arrow 421 from the mobile device 301 to the SIM component 350. This notification is a normal procedure for GSM compliant mobile phone. It may be used to control whether the number is authorized or not for the subscriber.

The USIM component will then analyze the content of the call control envelope, to extract the selected first number. The USIM will proceed with saving the selected first number in the USIM memory 352 for a later usage.

In an additional embodiment of the present method, illustrated in FIG. 4B with optional act 425, the USIM may check if one or more predefined criteria, also called here after redirection criteria, are matched by the selected first number. Provided such predefined criteria are matched, the present method will carry one with the subsequent act 430. Such redirection criteria, or in other words a redirection filtering, may for instance correspond to:
- the category of the number, for instance an emergency number (like 911) or a service number (like a 1-800 number),
- the length of the number, i.e. the number of digits,
- the type of number for instance international versus local, personal versus professional number, ...
- time of the day,

The optional redirection filtering 425 may be carried out on a per call basis. Furthermore, the redirection filtering may be activated or deactivated by the user, for instance through a menu to control the present two stage dialing feature. With such a menu, the user may activate/deactivate one or more of the redirection criteria offered in the present two stage dialing feature. When the optional filtering 425 is activated, and if the selected first number does not match the redirection criteria, the two stage dialing feature may be terminated.

In a further act 430, the USIM will respond back (arrow 431 in FIG. 4B) with the access number for the active media gateway 320. In other words, the USIM will provide the access number and instructions to the main processor of the mobile device 301 so that said processor sets up a communication in a further act 440 with the active media gateway, using the provided access number. This corresponds to arrows 441 and 442 in FIG. 4B between the mobile device 301 and the media gateway 320, the media gateway returning a confirmation message back to the mobile device (arrow 442) that the call is established.

Upon receiving the confirmation message from the media gateway 320, the mobile device 301 will, in a further act 450, notify the USIM 350 with an "Event Download" envelope including a "call connected" event information as known from 3GPP TS 31.111 (section 7.3). Through that "event download" envelope (arrow 451 in FIG. 4B), the USIM is notified that the call to the media gateway is established, i.e. up and active.

The first stage dialing, using the first stage dialing number, i.e. the access number, has been processed and the present method can carry on with the second stage dialing.

Now that the SIM has been notified through the confirmation message that the communication with the active media gateway has been established, in a further act 460, the SIM will send a DTMF proactive command (SEND DTMF) to the mobile device 301. This DTMF proactive command comprises the DTMF sequence corresponding to the saved first number, correctly formatted by the SIM so as to be understood by the active media gateway. In other words the SIM will use a format compatible with the media gateway. For instance the SIM card may store a template per know media gateway so that it can format the first selected number to make it compatible with the active media gateway.

With the illustration of a PBX, as the media gateway gives the mobile device access to the PBX "sitting" behind said gateway, the first number needs to be compatible with the PBX. To that extend, the SIM will reformat the first number in the proper syntax. If a user e.g. calls the number 06848289289, then the first number sent by the SIM to the media gateway in the proactive command may be # 1 #006848289289*.

The proactive command is in compliance with the existing commands of TS 31.111. The proactive command corresponds to arrow 461 in FIG. 4B.

Once the mobile device received the proactive command, the main processor 335 will analyze the proactive command to extract that DTMF sequence and subsequently transmit this sequence to the active media gateway (arrow 462 in FIG. 4B) over the previously established communication with the active media gateway 320.

In a further act 470, the media gateway will process the DTMF sequence, extract the first selected number there from, and further establish a communication to this number. The two calls from the first and second stage can be joined by the active media gateway. Thus a communication is established from the calling party to the called party thanks to the present two stage dialing feature.

In the previous illustration, the saved first number is sent over the established communication using DTMF. Alternatively, the saved first number may be sent to the active media gateway 320 using other communication protocols that do not require necessarily the established communication.

For instance, the first number may be sent using the USSD (Unstructured Supplementary Service Data) standard. Alternatively, the number may be sent over an IP (internet protocol) tunnel established between the mobile device 301 and the active media gateway 320. An SMS (short message service) message may also be sent by the mobile device to the media gateway. As with the exemplary embodiment using DTMF, another proactive commands (SEND USSD, SEND DATA, SEND SMS) in compliance with the existing commands of TS 31.111 may be used to send the selected first number.

In the present method, the proactive commands may be sent by the USIM component to the mobile device processor via the Application Protocol Data Unit (APDU) from ISO 7816.

The proposed method does not only limit its benefits to call control. It also introduces an innovative way to exchange signaling with enterprise telephony systems, commonly called PBXs. By re-using the framework capabilities offered by the SIM, a PBX subscriber or user may interact with the present method using his mobile device. The PBX user can for instance access his company's communication services like call conferencing or call transfer through a PBX menu. The access number is then the PBX server number.

By implementing this method inside the SIM we assure that any mobile phone will be able to display this PBX menu once the call has been connected with the two-stage dialing process detailed before.

Once the user has selected a PBX service which he would like to activate the method identifies the requested service and converts it into a signaling understood by the PBX with which the call is associated. This signaling can either be sent by DTMF tones inside the active call or IP packets through the packet switched bearer as explained earlier.

Putting the two-stage dialing logic into the USIM offers many benefits. The active media gateway may be updated as mentioned before using a SMS update. Furthermore, thanks to the 3GPP TS 31.111 specification and mobile vendors compliance, the SIM implementing the present method will be compatible with all mobile devices which comply with the SIM toolkit framework. Furthermore, the two stage dialing feature embedded into the USIM is the same for every device.

In the previous illustrations, reference was made to a cellular mobile device comprising a USIM. The present teachings may be applied to any wireless communication network hosting wireless mobile devices using an identification module similar to the USIM of a cellular network.

## Claims

1. A wireless communication device for use in a wireless communication network, said wireless communication device comprising:
- selecting means for allowing a user of the wireless communication device to select a first number,
- a processor arranged to set up communications with the wireless communication network and to receive the selected first number from the selected means,
- an identification module arranged to:
- receive the selected first number from the processor,
- store the selected first number in a memory,
- provide to the processor an access number to a media gateway so that said processor can set up a communication with said media gateway,
- upon receiving a confirmation message that the communication with the media gateway has been established, provide the selected first number to the processor for transmission of said selected first number to said media gateway.

2. The wireless communication device according to claim 1, wherein the processor is further arranged to transmit the selected first number over the established communication.

3. The wireless communication device according to one of the preceding claims, wherein the identification module is further arranged to provide the access number to the processor if the first selected number matches one or more predefined criteria.

4. The wireless communication device according to one of the preceding claims, wherein the identification module is further arranged to provide the first number using a format compatible with the media gateway.

5. An identification module for use in a wireless communication device of a wireless communication network, said wireless communication device comprising selecting means for allowing a user of the wireless communication device to select a first number, and a processor arranged to set up communications with the wireless communication network and to receive the selected first number from the selected means,
the identification module being arranged to:
- receive the selected first number from the processor,
- store the selected first number in a memory,
- provide to the processor an access number to a media gateway so that said processor can set up a communication with said media gateway,
- upon receiving a confirmation message that the communication with the media gateway has been established, provide the selected first number to the processor for transmission of said selected first number to said media gateway.

6. The identification module according to preceding claim, further arranged to provide the access number to the processor if the first selected number matches one or more predefined criteria.

7. The identification module according to one of the preceding claims 5 and 6, further arranged to provide the first number using a format compatible with the media gateway.

8. A method for operating a wireless communication device in a wireless communication network, said wireless communication device comprising:
- selecting means for allowing a user of the wireless communication device to select a first number,
- a processor arranged to set up communications with the wireless communication network and to receive the selected first number from the selected means,
- an identification module
the method being carried out by the identification module and comprising the acts of:
- receiving the selected first number from the processor,
- storing the selected first number in a memory,
- providing to the processor an access number to a media gateway so that said processor can set up a communication with said media gateway,
- upon receiving a confirmation message that the communication with the media gateway has been established, providing the selected first number to the processor for transmission of said selected first number to said media gateway.

9. The method of claim 8, said method further comprising an act of checking if the first selected number matches one or more predefined criteria and wherein the act of providing the access number to the processor is carried out if said one or more criteria are matched.

10. The method of one of the claims 8 and 9, further comprising an act of formatting the selected first number to a format compatible with the media gateway.

11. A computer readable carrier including computer program instructions that cause a computer to implement a method for operating a mobile device in a wireless communication device according to claims 8 to 10.
